# EUROPEAN PATENT APPLICATION

(11) **EP 2 477 375 A1**
(43) Date of publication of application: **18.07.2012**
(21) Application number: 12150705.7
(22) Date of filing: 11.01.2012
(51) Int. Cl.: H04L 29/06, H04L 9/08, H04W 12/04, H04W 8/24

(54) **Key management system and methods for distributed software**

(30) Priority: 17.01.2011 US 201113007711
(71) Applicant: General Electric Company, Schenectady, New York 12345 (US)
(72) Inventor: Lakshminarayanan, Sitaraman Suthamali, Atlanta, GA 30339 (US)
(74) Representative: Bedford, Grant Richard

(57) **Abstract**

A key management system (100) for distributed software applications includes a communication network (104) and one or more software applications (106,108,110) coupled to the communication network. The one or more software applications include an identification code that identifies each software application and a registration module (128, 130, 132) that requests a key pair from a key pair provider, the key pair including a public key and a private key. The system also includes a management console (102) coupled to at least some of the one or more software applications via the communication network and that is configured to store the public key associated with a first software application of the one or more software applications and to provide the public key associated with the first software application to a second software application of the one or more software applications upon receiving a subscription request for the first software application from the second software application.

## Description

The subject matter disclosed herein relates generally to security and, in particular, to managing keys in a system that includes distributed software.

Securing messages between distributed software applications (e.g., in a service oriented architecture (SOA)) typically requires the usage of Public-Private key pair exchanges between the applications. The keys are typically disturbed in a public key infrastructure (PKI) where public keys are bound to their respective user identities by means of a certificate authority (CA). However, in a large scale application or in a dynamic environment where there are multiple systems communicating between each other, key management gets complicated. The complications are further exacerbated when the communication occurs across differing hardware/software/technology platforms.

For organizations that have large distributed software applications on a system of servers, two approaches have typically been implemented for key management. The first includes utilization of an internal CA. The internal CA is on one server and each other server in the system is assigned a server certificate from the certificate authority. As the name implies, the server certificate applies to the server as whole, not a particular application on the server. As such, the first approach cannot tie a particular public key to a particular application. Alternatively, a requesting application can generate a self-signed certificate or buy certificates from a third party CA individually and exchange the public key assigned by the CA with another application.

According to one aspect of the invention, a key management system for distributed software applications is disclosed. In this aspect, the key management system includes a communication network and one or more software applications coupled to the communication network. Each of the one or more software applications include an identification code that identifies each software application and a registration module that requests a key pair from a key pair provider. The system also includes a management console coupled to at least some of the one or more software applications via the communication network and configured to store the public key associated with a first software application of the one or more software applications and to provide the public key associated with the first software application to a second software application of the one or more software applications upon receiving a subscription request for the first software application from the second software application.

According to another aspect of the invention, a method of managing key distribution in a system including distributed software applications is disclosed. The method of this aspect includes: receiving a registration request from a first software application of the distributed software applications at a key management console, the request including an identification code that identifies the first software application; storing the identification code and a public key associated with the first software application at the key management console; receiving a subscription request for the first software application from a second software application of the distributed software applications at the key management console; determining that the second software application is authorized to communicate with the first software application; and providing the public key to the second software application.

According to another aspect of the invention a method of communicating between a first software application and a second software application in a distributed software system is disclosed. The method of this aspect includes: sending, from the first software application operating a first server, a registration request to a key management console at a central server, the registration request including an identification code that identifies the first software application and either a public key associated with the first software application or a request for a public key that results in the assignment of a public key to the first software application; sending, from a second software application operating on a second server, a subscription request for the first software application to the key management console; receiving the public key at the second software application; and utilizing the public key to encrypt a message from the second software application to the first software application.

Various advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a system according to an embodiment of the present invention;
FIG. 2 is a flow chart illustrating a method according to one embodiment of the present invention;
FIG. 3 is a flow chart illustrating a method according to another embodiment of the present invention; and
FIG. 4 illustrates a system on which embodiments of the present invention may be implemented.

The detailed description explains embodiments of the invention, together with advantages and features, by way of example with reference to the drawings.

Embodiments of the present invention are directed to systems and methods for key management in a system that includes distributed software. In one embodiment, the systems and methods can be utilized in conformance with existing interoperability standards to manage the generation, registration, distribution, re-issue and revocation of public-private key pairs for applications (e.g., software) in a distributed software system. Unlike prior solutions, according to embodiments of the present invention the keys are specific to a particular application rather than to a server that contains the application. In addition, the systems and methods described herein can automate the distribution of new keys from one software application to other software applications that have subscribed to the software application. In addition, the systems and method herein can integrate with native key management tools such as JAVA key store that updates any software configuration files in the particular application. The systems and method disclosed herein have the technical effect of reducing the time to develop PKI functionality within a system that includes distributed software applications.

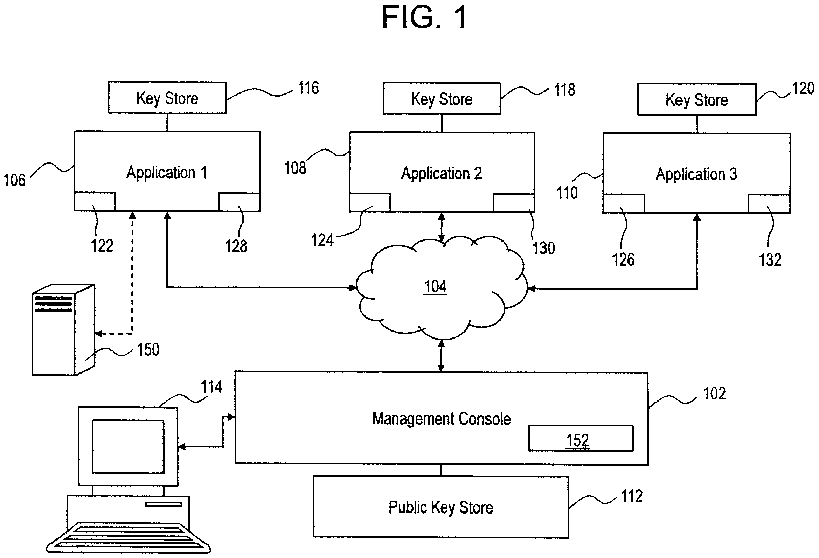

FIG. 1 illustrates a distributed system 100 according to one embodiment. The distributed system 100 includes a management console 102. As described in greater detail below, the management console 102 manages the distribution of key pairs among the software applications in the system 100. As such, the management console 102 is a PKI management console in one embodiment. In one embodiment, keys are provided to individual software applications, rather than to the server on which the application is resident. The management console 102 can be implemented in a server or other computing device.

The system 100 illustrated in FIG. 1 also includes a communication network 104. The communication network 104 can be any type of communication network now known or later developed. For example, the communication network 104 can be the Internet, a private network, a local area network (LAN) or a wide area network (WAN). It shall be understood that the communication network 104 can include more than one network. For example, the communication network 104 can include a LAN in communication with a WAN in one embodiment. In another embodiment, the communication network 104 can include an internal bus within a single server and any combination of other networks. Such an embodiment may exist in the event that one or more software applications are resident on a same server.

The system 100 also includes a plurality of software applications 106, 108, 110. The software applications 106, 108, 110 are communicatively coupled to the communication network 104 such that they can communicate with one another and the management console 102. The number of software applications 106, 108, 110 in the system 100 is variable, not limited, and depends on the context. The software applications 106, 108, 110 can all be located on different servers in one embodiment. In another embodiment, at least one software application 106, 108, 110 is located on a same server as another software application 106, 108, 110.

In one embodiment, one or more of the software applications 106, 108, 110 may need to communicate encrypted information to and receive encrypted information from another one of the software applications 106, 108, 110. In such an embodiment, the software applications 106, 108, 110 need to exchange public keys with one another. It shall be understood the software applications 106, 108 and 110 may need to send digitally signed messages to one another. In such a case, and by way of example, software application 106 can register its public key with the management console 102 and then software application 108 can subscribe to that public key. In operation, software application 106 can sign a message sent to software application 108 with its private key. Software application 108 can then verify the signature using the public key it received from the management console 102.

According to one embodiment, the management console 102 is configured to manage the exchange of keys between software applications 106, 108, 110. As such, in one embodiment the management console 102 is coupled to a central key store 112 that stores public keys for some or all of the software applications 106, 108, 110 and any information associated with the stored public keys. The associated information can include, for example, identification of other software applications that are allowed to receive the public key, when the key expires, and the like.

In general, the central key store 112 is a database and could be included within or be a separate entity from the management console 102. While the central key store 112 is shown directly coupled to the management console 102 in FIG. 1, it shall be understood that the connection could be through the communications network 104 in an alternative embodiment. In one embodiment, the central key store 112 is implemented as a database utilizing a lightweight directory access protocol (LDAP).

In one embodiment, the management console 102 is coupled to a user terminal 114 that allows a user (e.g., a system administrator) to provide information to the management console 102. In one embodiment, the system administrator provides the management console 102 with information about particular software applications that can register/store their public key on the management console 102 or that can use the management console 102 to generate a key pair and store the resulting public key.

The generation of key pairs can be implemented in a known manner. In an alternative embodiment, the information about particular software applications that can utilize the management console 102 can be received from other sources.

As illustrated, each software application 106, 108, 110 is coupled to an application key store 116, 118, 120, respectively. The application key stores 116, 118, 120 can be maintained by any known or later developed keytool 122, 124, 126, respectively. A keytool is a key and certificate management utility. It enables the software applications 106, 108, 110 to administer their own public/private key pairs and associated certificates for use in self-authentication (where the software application authenticates itself to other software application) or data integrity and authentication services, using digital signatures. It also allows software applications 106, 108, 110 to cache the public keys (optionally, in the form of certificates) of their other software applications. The keytools 122, 124, 126 can be implemented by known methods. As discussed above, the management console 102 controls distribution of the public keys.

An example of the operation of the system 100 is informative. Suppose that the first software application 106 is to be added to the system 100 that already includes the second and third software applications 108, 110. Utilizing the user terminal 114, a user, such as a system administrator, creates a new entry in the management console 102 for the first software application 106. The entry may include, for example, the location of the first software application 106 (e.g., server name) and the name of the first software application 106. The name can be descriptive of the application type or specific to the particular software application. In one embodiment, the entry may later be provided with a listing of all other software applications that have subscribed to the first software application 106. In one embodiment, the entry may also or alternatively include a listing of other software applications that the first software application 106 has subscribed to.

In this example, after the entry is created, the management console 102 assigns an identification code to the first software application 106. This code may be provided electronically or manually to the first software application 106 before or when the first software application 106 is installed.

The first software application 106 includes, in one embodiment, a registration module 128. The registration module 128 causes the first software application to become registered with the management console 102. In one embodiment, the process of registration can include causing the first software application 106 to identify itself to the management console 102 utilizing the identification code described above. In one embodiment, registration also includes providing a public key to the management console 102. In such an embodiment, the registration module 128 causes the first software application 106 to request and receive a key pair from an external key pair generator 150. In an alternative embodiment, the management console 102 can generate the key pair. In such an embodiment, the registration module 128 generates a registration request that also includes a request for a key pair. Regardless of how created, the public key for the first software application 106 is stored by the management console 102 and related to the entry maintained by the management console 102 for the first software application 106. In this manner, the public key is associated with a particular software application, not with the server on which the application resides. Of course, the private key is provided to the first software application 106.

As illustrated in FIG. 1, the second software application 108 and the third software application 110 also include registration modules 130, 132, respectively. These registration modules operate in the same or similar manner as registration module 128 in one embodiment.

Suppose now that the first software application 106 needs to communicate with the second software application 108. In such a situation, the first software application 106 presents a subscription request to the management console 102. The subscription request can identify the second software application 108 by name, type or identification number or a combination thereof. Assuming that the first software application 106 is authorized to communicate with the second software application 108, the subscription requests is granted and the public key for the second software application 108 is provided to the first software application 106. Whether the first software application 106 is authorized depends on information provided when the entry in the management console 102 for the second software application 108 was created. In addition, the granting of the subscription request causes one or both of: 1) the subscription to be stored in the entry for the first software application 106; and 2) the subscription to be stored in the entry for the second software application 108; to occur.

Suppose now that either the public key for the second software application 108 expires (it is assumed that the entry for the second software application 108 included an expiration time associated with it). In such a case, the application key store 116 for the first software application 106 would contain an invalid public key to communicate with the second software application 108. The same result can occur if the second software application 108 revokes or cancels its public key or causes the public key to otherwise change.

In one embodiment, the management console 102 includes a key expiration module 152. The key expiration module 152 monitors the expiration of public keys stored by the management console 102 (e.g., in the public key store 112) and provides an indication that the key of particular application is about to expire to the application. The particular application can then let the key expire, extend the key, or provide a new key. In the event that it provides a new key, the management console 102 can determine the other applications that have subscribed to the application and provide them with the new public key. One of ordinary skill will realize that the determination can be made in different manners depending on how subscriptions are stored. In one embodiment, the new public key is then provided to the keytools 122, 124, 126 of subscribing software applications and stored in their key stores. It shall be understood that the keytools 122, 124, 126 can store the new keys in the key stores 116, 118, 120 and will update any configuration file as necessary.

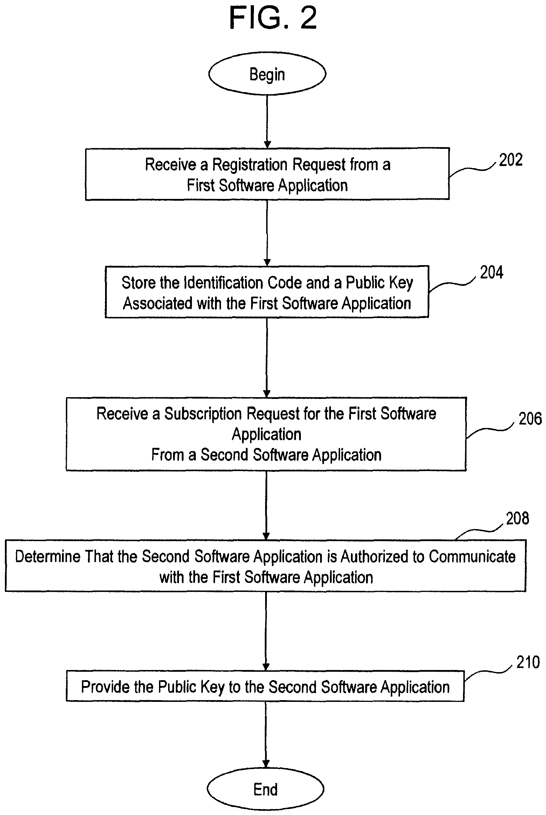

FIG. 2 is a flow chart illustrating a method according to one embodiment. The flow chart illustrated in FIG. 2 is an example, from the perspective of the management console, of a method of managing key distribution key in a system including distributed software applications according to one embodiment. The method of this embodiment includes block 202 where a registration request from a first software application of the distributed software applications is received at a key management console. As discussed above, the request can include an identification code that identifies the first software application. The identification code is created by the management console in one embodiment.

At block 204, the identification code and a public key associated with the first software application are stored at the key management console. As discussed above, the request can include the public key or the management console can generate the public key. In one embodiment, such information is stored in an entry in a database related to the first software application. The entry either includes or can include other information in one embodiment. Such other information includes, for example, a listing or other representation of other software applications that can subscribe to the first software application. Such a listing can be created, for example, when a system administrator creates the entry for the first software application. In addition, this other information can include, for example, a listing of software applications that have subscribed to the first application and other software programs the first application has subscribed to.

At block 206, a subscription request for the first software application is received from a second software application. The subscription request can include an identification of the requestor by name, type or identification number or a combination thereof. At block 210 the public key for the first software application is provided to the second software application provided that, at block 208, it is determined that the second software application is authorized to communicate with the first software application. Such authorization can include examining the entry associated with the first software application.

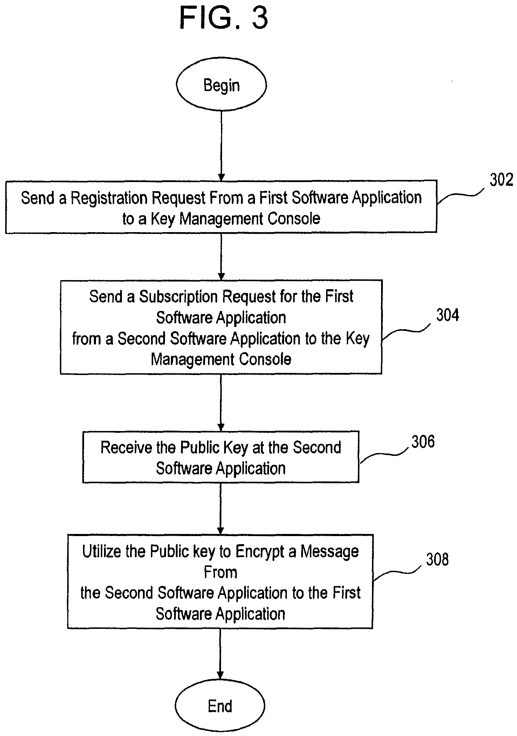

FIG. 3 is a flow chart illustrating a method of communication between two software applications according to another embodiment of the present invention. The method illustrated in FIG. 3 is from the perspective of two different software applications in a system that includes a management console that manages the distribution of keys. The software applications can be on the same or different servers than each other.

At block 302, the first software application sends a registration request to the key management console. The key management console can be at a central server in one embodiment. In one embodiment, the registration request includes an identification code that identifies the first software application and a public key associated with the first software application. In another embodiment, the registration request includes the identification code that identifies the first software application and a request for key pair that includes a public key.

At block 304, the second software application sends a subscription request for the first software application to the key management console. Assuming that the second software application is authorized, at block 306, the public key for the first software application is received at the second software application. At block 308 the public key is utilized to encrypt a message from the second software application to the first software application. Of course, the public key could be utilized verify a public key rather than encrypt a message in one embodiment.

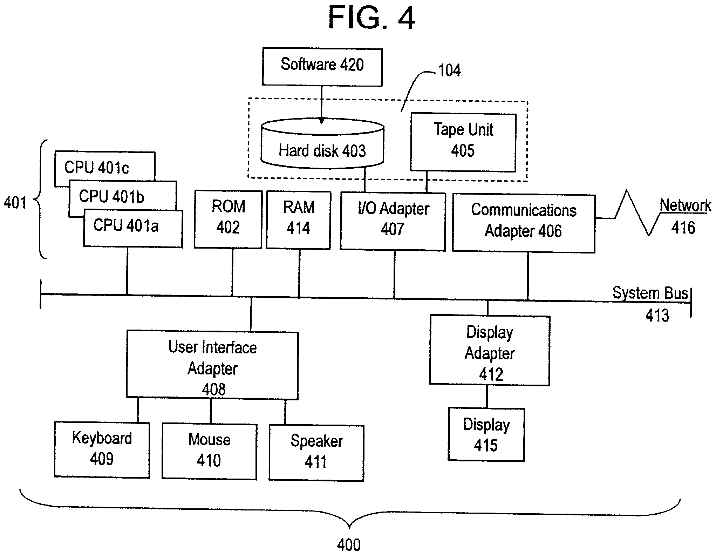

Referring now to FIG. 4, there is shown an embodiment of a processing system 400 for implementing the teachings herein. The processing system 400 is an example of a server or other computing device on which the management console 102 may be implemented or on which the software applications 106, 108, 110 can be run on (FIG. 1).

In this embodiment, the system 400 has one or more central processing units (processors) 401a, 401b, 401c, etc. (collectively or generically referred to as processor(s) 401). In one embodiment, each processor 401 may include a reduced instruction set computer (RISC) microprocessor. Processors 401 are coupled to system memory 414 and various other components via a system bus 413. Read only memory (ROM) 402 is coupled to the system bus 413 and may include a basic input/output system (BIOS), which controls certain basic functions of system 400.

FIG. 4 further depicts an input/output (I/O) adapter 407 and a network adapter 406 coupled to the system bus 413. I/O adapter 407 may be a small computer system interface (SCSI) adapter that communicates with a hard disk 103 and/or tape storage drive 405 or any other similar component. I/O adapter 407, hard disk 403, and tape storage device 405 are collectively referred to herein as mass storage 404. A network adapter 406 interconnects bus 113 with an outside network 416 (e.g., communication network 104 of FIG. 1) enabling system 400 to communicate with other such systems. A screen (e.g., a display monitor) 415 can be connected to system bus 413 by display adaptor 412, which may include a graphics adapter to improve the performance of graphics intensive applications and a video controller. In one embodiment, adapters 407, 406, and 412 may be connected to one or more I/O busses that are connected to system bus 413 via an intermediate bus bridge (not shown). Suitable I/O buses for connecting peripheral devices such as hard disk controllers, network adapters, and graphics adapters typically include common protocols, such as the Peripheral Components Interface (PCI). Additional input/output devices are shown as connected to system bus 413 via user interface adapter 408 and display adapter 412. A keyboard 409, mouse 410, and speaker 411 are all interconnected to bus 413 via user interface adapter 408, which may include, for example, an I/O chip integrating multiple device adapters into a single integrated circuit.

It will be appreciated that the system 400 can be any suitable computer or computing platform, and may include a terminal, wireless device, information appliance, device, workstation, mini-computer, mainframe computer, server, personal digital assistant (PDA) or other computing device. It shall be understood that the system 100 may include multiple computing devices linked together by a communication network. For example, there may exist a client-server relationship between two systems and processing may be split between the two.

Any computer operating system may be utilized by the system 400. As illustrated, the system 400 also includes a network interface 406 for communicating over a network 416. The network 416 can be a local-area network (LAN), a metro-area network (MAN), or wide-area network (WAN), such as the Internet or World Wide Web.

As disclosed herein, the system 400 may include machine-readable instructions stored on machine readable media (for example, the hard disk 404) to execute one or more methods disclosed herein. As discussed herein, the instructions may be referred to as "software" 420. The software 420 may be produced using software development tools as are known in the art. The software 420 may include various tools and features for providing user interaction capabilities as are known in the art.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A key management system for distributed software applications, the system comprising:
   a communication network;
   one or more software applications coupled to the communication network, each of the one or more of software applications including an identification code that identifies each software application and a registration module that requests a key pair from a key pair provider, the key pair including a public key and a private key;
   a management console coupled to at least some of the one or more software applications via the communication network, the management console configured to store the public key associated with a first software application of the one or more software applications and to provide the public key associated with the first software application to a second software application of the one or more software applications upon receiving a subscription request for the first software application from the second software application.
2. The system of clause 1, wherein each of the one or more software applications are located on different servers.
3. The system of any preceding clause, wherein the at least two of the one or more software applications are located on a same server.
4. The system of any preceding clause, further comprising:
   a central key store, coupled to the management console, that stores public keys associated with the one or more software applications.
5. The system of any preceding clause, wherein the registration modules requests the key pair from the management console and registers the key pair with the management console.
6. The system of any preceding clause, wherein the registration modules request key pairs from a third-party key pair provided external to the management console.
7. The system of any preceding clause, wherein the management console is located on a first server and at least one of the software applications is located on the first server.
8. A method of managing key distribution in a system including distributed software applications, the method comprising:
   receiving a registration request from a first software application of the distributed software applications at a key management console, the request including an identification code that identifies the first software application;
   storing the identification code and a public key associated with the first software application at the key management console;
   receiving a subscription request for the first software application from a second software application of the distributed software applications at the key management console;
   determining that the second software application is authorized to communicate with the first software application; and
   providing the public key to the second software application.
9. The method of any preceding clause, further comprising:
   receiving a new public key at the key management console from the first software application;
   replacing the public key with the new public key; and
   alerting the second software application that the public key has been replaced.
10. The method of any preceding clause, further comprising:
   receiving a request from the second software application for the new public key; and
   providing the new public key to the second software application.
11. The method of any preceding clause, wherein the public key includes an expiration time and wherein the method further comprises:
   notifying the first software application that the public key has expired.
12. The method of any preceding clause, further comprising:
   determining that the public key has expired;
   generating a new key pair at the key management console, the key pair including a new public key and a new private key;
   replacing the public key with the new public key in the key management console;
   providing the new public key to the first software application; and
   providing the new public key to the second software application.
13. The method of any preceding clause, further comprising:
   receiving information identifying software applications that can register with the key management console, the listing including the first software application and the second software application;
   generating the identification code for the first software application and an identification code for the second software application;
   providing the identification code for the first software application to the first software application; and
   providing the identification code for the second software application to the second software application.
14. The method of any preceding clause, wherein determining is based on the identification code for the second software application.
15. A method of communicating between a first software application and a second software application in a distributed software system, the method comprising:
   sending, from the first software application operating a first server, a registration request to a key management console at a central server, the registration request including an identification code that identifies the first software application and either a public key associated with the first software application or a request for a public key that results in the assignment of a public key to the first software application;
   sending, from a second software application operating on a second server, a subscription request for the first software application to the key management console;
   receiving the public key at the second software application; and
   utilizing the public key to encrypt a message from the second software application to the first software application or to verify a signature on a message from the first software application to the second software application.
16. The method of any preceding clause, further comprising:
   sending, from a third software application operating on a third server, a subscription request for the first software application to the key management console;
   receiving the public key at the third software application; and
   utilizing the public key to encrypt a message from the third software application to the first software application or to verify a signature on a message from the first software application to the third software application.
17. The method of any preceding clause, further comprising:
   sending a revocation instruction from the first software application to the key management system;
   receiving an indication that the public key has been revoked at the second software application.
18. The method of any preceding clause, further comprising:
   receiving a new public key for the first software application at the second software application; and
   updating a key registry of the second software application with the new public key.

## Claims

1. A key management system (100) for distributed software applications, the system (100) comprising:
a communication network (104);
one or more software applications (106,108,110) coupled to the communication network (110), each of the one or more of software applications (106,108,110) including an identification code that identifies each software application and a registration module (128, 130, 132) that requests a key pair from a key pair provider, the key pair including a public key and a private key;
a management console (102) coupled to at least some of the one or more software applications (106,108,110) via the communication network (104), the management console (102) configured to store the public key associated with a first software application (106) of the one or more software applications (106,108,110) and to provide the public key associated with the first software application (106) to a second software application (108) of the one or more software applications (106,108,110) upon receiving a subscription request for the first software application (106) from the second software application (108).

2. The system (100) of claim 1, wherein each of the one or more software applications (106,108,110) are located on different servers.

3. The system (100) of any preceding claim, wherein the at least two of the one or more software applications (106,108,110) are located on a same server.

4. The system (100) of any preceding claim, further comprising:
a central key store (112), coupled to the management console (102), that stores public keys associated with the one or more software applications (106,108,110).

5. The system (100) of any preceding claim, wherein the registration modules (128, 130, 132) requests the key pair from the management console (102) and registers the key pair with the management console (102).

6. The system (100) of any preceding claim, wherein the registration modules (128, 130, 132) request key pairs from a third-party key pair provided external to the management console (102).

7. The system (100) of any preceding claim, wherein the management console (102) is located on a first server and at least one of the software applications (106,108,110) is located on the first server.

8. A method of managing key distribution in a system (100) including distributed software applications, the method comprising:
receiving a registration request from a first software application (106) of the distributed software applications at a key management console (102), the request including an identification code that identifies the first software application (106);
storing the identification code and a public key associated with the first software application (106) at the key management console (102);
receiving a subscription request for the first software application (106) from a second software application (108) of the distributed software applications at the key management console (102);
determining that the second software application (108) is authorized to communicate with the first software application (106); and
providing the public key to the second software application (108).

9. The method of claim 8, further comprising:
receiving a new public key at the key management console (102) from the first software application (106);
replacing the public key with the new public key; and
alerting the second software application (108) that the public key has been replaced.

10. The method of claim 9, further comprising:
receiving a request from the second software application (108) for the new public key; and
providing the new public key to the second software application (108).
